# EUROPÄISCHE PATENTSCHRIFT

(11) **EP 3 921 099 B1**
(45) Veröffentlichungstag und Bekanntmachung des Hinweises auf die Patenterteilung: **10.04.2024**
(21) Anmeldenummer: 20703739.1
(22) Anmeldetag: 05.02.2020
(51) Int. Cl.: B22F 1/05, B22F 1/145, B22F 1/148, B22F 3/20, B22F 9/04, B22F 9/22, B33Y 70/00, C22C 1/04, C22C 1/047, C22C 13/00, C22C 21/04, C22C 21/08, C22C 21/10, C22C 27/02, B22F 1/065, B22F 5/12, B22F 10/25, B22F 10/28, B22F 10/73, B22F 9/08

(54) **PULVER AUF BASIS VON NIOBZINNVERBINDUNGEN FÜR DIE HERSTELLUNG VON SUPRALEITENDEN BAUTEILEN**
POWDERS BASED ON NIOBIUM-TIN COMPOUNDS FOR PRODUCING SUPERCONDUCTIVE COMPONENTS
POUDRES À BASE DE COMPOSÉS NIOBIUM-ÉTAIN POUR LA FABRICATION D'ÉLÉMENTS SUPRACONDUCTEURS

(30) Priorität: 08.02.2019 DE 102019000906
(43) Veröffentlichungstag der Anmeldung: 15.12.2021
(73) Patentinhaber: TANIOBIS GmbH, 38642 Goslar (DE)
(72) Erfinder: BRUMM, Holger, 38644 Goslar (DE); WEINMANN, Markus, 38640 Goslar (DE); SCHNITTER, Christoph, 31188 Holle (DE)
(86) Internationale Anmeldenummer: PCT/EP2020/052819
(87) Internationale Veröffentlichungsnummer: WO 2020/161166

(56) Entgegenhaltungen:
- US-A1- 2003 230 167
- R. O. SUZUKI ET AL: "Processes to produce superconducting Nb3Sn powders from Nb-Sn oxide", JOURNAL OF MATERIALS SCIENCE, Bd. 22, Nr. 6, 1. Juni 1987 (1987-06-01), Seiten 1999-2005, XP055671491, Dordrecht ISSN: 0022-2461, DOI: 10.1007/BF01132930

## Beschreibung

Die vorliegende Erfindung betrifft Pulver auf Basis von Niobzinnverbindungen, insbesondere NbₓSn_{y} mit 1 ≤ x ≤ 6 und 1 ≤ y ≤ 5, für die Herstellung von supraleitenden Bauteilen, wobei sich die Pulver durch eine hohe Porosität auszeichnen, ein Verfahren zu deren Herstellung sowie die Verwendung solcher Pulver für die Herstellung von supraleitenden Bauteilen.

Supraleiter bezeichnen Materialien, deren elektrischer Widerstand beim Unterschreiten einer bestimmten Temperatur, der sogenannten Sprungtemperatur, auf null fällt. Im supraleitenden Zustand bleibt das Innere des Materials frei von elektrischen und magnetischen Feldern und der Strom wird verlustfrei transportiert. Supraleiter werden unter anderem zur Erzeugung starker, konstanter Magnetfelder oder für die Herstellung verlustarmer Transformatoren verwendet, die bei gleicher Leistung kleinere Abmessungen und Masse als herkömmliche Transformatoren haben und somit vor allem im mobilen Betrieb Vorteile bringen.

Supraleiter lassen sich in verschiedene Kategorien wie metallische Supraleiter, keramische Supraleiter und Hochtemperatursupraleiter einteilen. Spätestens seit der Entdeckung der Sprungtemperatur von Niobzinn (Nb₃Sn) von 18,05 K sind Niob und seine Legierungen in den Fokus als Materialien für die Herstellung von Supraleitern gerückt. So werden aus Niob gefertigte supraleitende Hohlraumresonatoren beispielsweise in Teilchenbeschleunigern (u.a. XFEL und FLASH am DESY in Hamburg oder CERN in Genf) eingesetzt.

Als supraleitende Bauteile sind insbesondere supraleitende Drähte von Interesse, die unter anderem zur Herstellung von supraleitenden Spulen verwendet werden. Für starke supraleitende Spulen sind in der Regel kilometerlange Drähte mit nur einigen Mikrometer dicken Leiterfäden/Filamenten nötig, die komplizierte Herstellungsverfahren erfordern.

Für die Herstellung solcher Drähte, insbesondere auf Basis von Niobzinnlegierungen, wird unter anderem auf das sogenannte Bronze-Verfahren zurückgegriffen, wobei eine Cu-Sn-Legierung als Ausgangsstoff verwendet wird.

So beschreibt EP 0 048 313 supraleitende Drähte auf Basis von Bronze-Nb₃Sn, die bei hohen Magnetfeldern anwendbar sind und die durch eine kubische Phase im Bronze-Nb₃Sn-Draht gekennzeichnet sind und stabilisierende, die Bildung einer tetragonalen Phase weitgehend verhindernde und/oder tetragonale Deformation (1-c/a) reduzierende Legierungsbestandteile aus der Gruppe Li Be Mg Sc Y U Ti Zr Hf V Ta Mo Re Fe Ru Ni Pd Zn Al Ga In TI Si Ge Sb im Gewichtsprozent-Bereich zwischen 0,01 und 7, bezogen auf den Nb-Anteil, und/oder zwischen 0,05 und 10, bezogen auf den Bronze-Anteil im Draht, aufweisen.

Alternativ können supraleitende Drähte auf Basis von Niobzinnlegierungen durch das sogenannte PIT (powder-in-tube)-Verfahren hergestellt werden, bei dem in ein Niobrohr eine pulverförmige zinnhaltige Ausgangsverbindung eingebracht und dann zu einem Draht ausgezogen wird. In einem letzten Schritt wird eine supraleitende Nb₃Sn-Grenzschicht zwischen der niobhaltigen Rohrhülle und dem eingefüllten zinnhaltigen Pulver durch eine Wärmebehandlung gebildet. In Bezug auf die zinnhaltige Ausgangsverbindung ist dabei die Phasenzusammensetzung, chemische Reinheit und Partikelgröße, die nicht größer als der Durchmesser des fertigen Filaments sein darf, entscheidend.

T. Wong et all beschreibt einen PIT Prozess und die Herstellung der zinnhaltigen Ausgangsverbindung am Beispiel des NbSn₂ (T. Wong et al, "Ti and Ta Additions to Nb3Sn by the Powder in Tube Process", IEEE Transactions on Applied Superconductivity, Vol. 11, No 1 (2001), 3584-3587). Nachteilig bei dem Verfahren ist dabei, dass für eine zufriedenstellende Umsetzung von Niob mit Zinn zum NbSn₂ ein mehrstufiger Prozess aus Mahlungen und thermischen Behandlungen von bis zu 48 Stunden notwendig ist. Weiterhin ist die allgemeine Lehre, dass der Sauerstoffgehalt möglichst niedrig sein sollte.

US 7,459,030 beschreibt ein Herstellungsverfahren für einen supraleitenden Nb₃Sn-Draht nach dem PIT Prozess, bei dem ein Tantalzinnlegierungspulver als Ausgangsverbindung verwendet wird. Zur Herstellung dieser werden K₂NbF₇ und K₂TaF₇ eingesetzt, die vor der Umsetzung mit Zinn zu dem jeweiligen Niob- und Tantalmetall reduziert werden. Das beschriebene Verfahren weist allerdings die Nachteile einiger Beschränkungen für die Verwendung dieser Niob- und Tantalmetalle auf. So können nur solche mit einem maximalen Gehalt an Sauerstoff von weniger als 3000 ppm und Wasserstoff von weniger als 100 ppm eingesetzt werden. Die Überschreitung des Sauerstoffgehaltes führt zu einer minderen Qualität des fertigen Drahtes. Bei Wasserstoffwerten über 100 ppm treten sicherheitstechnische Probleme bei der Prozessführung auf, da bei der Temperaturbehandlung der Wasserstoff entweicht. Weiterhin weist das beschriebene Verfahren die Nachteile auf, dass die Zielverbindung einen hohen Gehalt an unreagiertem Zinn enthält und der fertige Drahtkern weiterhin tantalhaltige Verbindungen enthält, was sich negativ auf die supraleitenden Eigenschaften des Drahtes auswirken kann. Weiterhin fallen bei der Reduktion der Ausgangsverbindungen K₂NbF₇ und K₂TaF₇ schwerlösliche Metallfluoride wie beispielsweise MgF₂ oder CaF₂ an, die nicht vollständig abgetrennt werden können. Darüber hinaus sind alle fluorhaltigen Verbindungen in der Prozesskette sehr toxisch.

M. Lopez et al beschreiben die Synthese von nano-intermetallischem Nb₃Sn durch mechanische Legierung und Glühen bei niedrigen Temperaturen (M. Lopez et al, "Synthesis of nano intermetallic Nb3Sn by mechanical alloying and annealing at low temperature", Journal of Alloys and Compounds 612 (2014), 215-220). Das beschriebene Verfahren weist allerdings den Nachteil auf, dass durch die Mahlung Verunreinigungen in das Produkt eingetragen werden.

US 2003/230167 offenbart ein Pulver umfassend eine Nb Legierung geeignet für die Herstellung supraleitender Bauteile, dadurch gekennzeichnet, dass das Pulver dreidimensionale Agglomerate mit einer Partikelgröße D90 von weniger als 400 µm aufweist.

R. O. Suzuki et al, in J. Mater. Sci., Bd. 22, Nr. 6, 1. 1987, Seiten 1999-2005, offenbaren Nb₃Sn-Materialien als gute Supraleitende Materialien.

Alle im Stand der Technik bekannten Verfahren zur Herstellung von supraleitenden Drähten aus Nb₃Sn beziehungsweise zu deren Herstellung notwendigen Niob-Zinn-Vorläuferpulvern, wie z.B. NbSn₂, aus den Elementen weisen den Nachteil auf, dass zur vollständigen Umsetzung des Niobs mit Zinn dieses über Festkörperdiffusion in das Innere der Niobpartikel gelangen muss. Dieser Prozess ist äußerst langwierig und kann aufgrund der Zersetzung von NbSn₂ bei Temperaturen oberhalb von 840 C auch durch Energieeintrag nicht beschleunigt werden. Insbesondere die Herstellung von NbSn₂ gestaltet sich in der Praxis schwierig. Die bekannte Exothermie der Reaktion führt regelmäßig dazu, dass unter den üblichen Prozessbedingungen von 800 bis 1200 °C die Zersetzungstemperatur von NbSn₂ von 840 °C überschritten wird.

Des Weiteren lassen sich die im Stand der Technik bekannten Niob-Zinn-Pulver nur schwer aufmahlen, was zum Eintrag von Verunreinigungen aus den verwendeten stahl- oder hartmetallhaltigen Mahlmedien wie beispielsweise Eisen, Cobalt, Nickel, Silizium, Wolfram oder Kohlenstoff und bei der Drahtherstellung zu qualitativ minderwertigen Produkten führt.

Ein weiterer Nachteil bekannter Verfahren zur Herstellung der Niob-Zinn-Pulver ist die Verwendung von sehr toxischen halogenhaltigen Verbindungen wie beispielsweise K₂NbF₇ oder NbCl₅. Diese dienen als Vorstoffe für eine Reduktion mit einem geeigneten Reduktionsmittel zum Niobmetall, was in einem weiteren Schritt mit Zinn zur Niob-Zinn-Zielverbindung umgesetzt wird.

Des Weiteren weisen die bekannten Verfahren zur Herstellung der Niob-Zinn-Pulver den Nachteil auf, dass durch Sauerstoffeintrag der Elemente Niob und Zinn ein signifikanter Anteil an Sauerstoff auf die Zielverbindungen übertragen werden. Daher ist beispielsweise das Verfahren nach US 7,459,030 auf die Verwendung von Niob und Tantalmetallpulvern mit einem Sauerstoffgehalt von maximal 3000 ppm und Zinn mit einem Sauerstoffgehalt von maximal 2000 ppm beschränkt.

Die Aufgabe der vorliegenden Erfindung ist es daher geeignete Ausgangsverbindungen für die Herstellung von supraleitenden Bauteilen, insbesondere supraleitenden Drähten, zur Verfügung zu stellen, die eine Verkürzung des langwierigen Festphasendiffusionsschritts ermöglichen und ein verbessertes Aufmahlverhalten aufweisen sowie ein Verfahren zu deren Herstellung, das zudem ohne die Reduktion von halogenhaltigen Vorstoffen auskommt.

Es wurde überraschend gefunden, dass diese Aufgabe durch ein Pulver gelöst wird, das Agglomerate mit einer spezifischen Porosität aufweist.

Ein erster Gegenstand der vorliegenden Erfindung ist daher ein Pulver gemäß den beigefügten Ansprüchen.

Der D90-Wert beziehungsweise der D50-Wert ist der Wert, der den prozentualen Anteil der Agglomerate im Pulver angibt, die eine Partikelgröße von weniger oder gleich der angegebenen Größe aufweisen.

In einer bevorzugten Ausführungsform handelt es sich bei der NbₓSn_{y}-Verbindung um eine Verbindung ausgewählt aus der Gruppe bestehend aus Nb₃Sn, Nb₆Sn₅, NbSn₂ und Mischungen hiervon.

Es hat sich überraschend gezeigt, dass die erforderlichen Diffusionswege innerhalb des Niobfestkörpers im erfindungsgemäßen Pulver aufgrund der geringen Primärpartikelgröße deutlich reduziert sind und durch die besondere Porenstruktur das Zinn bei der Umsetzung sehr gut in das Innere der Agglomerate gelangen kann, wodurch der Herstellungsprozess signifikant beschleunigt werden kann. Weiterhin wurde überraschend gefunden, dass die Temperaturen, bei denen die Herstellung der Pulver in der Regel vorgenommen wird, beziehungsweise die Reaktionszeiten deutlich reduziert werden konnten. So konnte beispielsweise NbSn₂, das nur bis zu einer Temperatur von 840 °C stabil ist, bei einer Temperatur von weniger als 800 °C im Rahmen der vorliegenden Erfindung in weniger als 6 Stunden und sogar in weniger als 4 Stunden hergestellt werden. Für Nb₃Sn ergab sich bei einer Temperatur von 1050 °C ein Zeitfenster von weniger als 6 Stunden beziehungsweise bei einer Temperatur von 950 °C ein Zeitfenster von weniger als 8 Stunden.

Für die Herstellung von Supraleitern hat es sich als besonders vorteilhaft erwiesen, phasenreine Pulver zu verwenden, um eine Beeinflussung der supraleitenden Eigenschaften durch etwaige Fremdphasen zu vermeiden. Es wurde überraschend gefunden, dass sich das erfindungsgemäße Pulver weiterhin durch einen hohen Reinheitsgrad auszeichnet, was sich unter anderem dadurch äußert, dass es nur einen geringen Anteil an Phasen von anderen Verbindungen als der jeweiligen Zielverbindung aufweist. In einer bevorzugten Ausführungsform ist das erfindungsgemäße Pulver daher dadurch charakterisiert, dass die Verbindungen Nb₃Sn oder Nb₆Sn₅ oder NbSn₂ einen Anteil von jeweils größer 90%, vorzugsweise größer 94%, besonders bevorzugt von größer 97%, ausmachen, bezogen auf alle nachgewiesen kristallographischen Phasen und bestimmt durch Rietveld-Analyse eines Röntgendiffraktogramms des erfindungsgemäßen Pulvers.

In einer weiteren bevorzugten Ausführungsform ist das erfindungsgemäße Pulver dadurch charakterisiert, dass der Anteil an metallischem Zinn im Pulver weniger als 3%, vorzugsweise weniger als 0,5% beträgt, bezogen auf alle nachgewiesen kristallographischen Phasen und bestimmt durch Rietveld-Analyse eines Röntgendiffraktogramms des erfindungsgemäßen Pulvers. In einer besonders bevorzugten Ausführungsform ist das erfindungsgemäße Pulver im Wesentlichen frei von metallischem Zinn. In diesem Zusammenhang ist unter "im Wesentlichen frei" zu verstehen, dass der Anteil von metallischem Zinn in einem Röntgendiffraktogramm nicht nachweisbar ist.

Die Anwesenheit von Sauerstoff kann zu einer Beeinträchtigung der Eigenschaften des Supraleiters führen. Hier hat es sich überraschend gezeigt, dass die erfindungsgemäßen Pulver trotz der erhöhten Porosität keine gegenüber dem Stand der Technik erhöhten Sauerstoffgehalte aufweisen. Daher ist eine Ausführungsform bevorzugt, in der das Pulver einen Sauerstoffgehalt von weniger als 1,8 Gew.-%, vorzugsweise 0,35 bis 1,5 Gew.-%, insbesondere 0,5 bis 1,2 Gew.-% aufweist, bezogen auf das Gesamtgewicht des Pulvers.

Das erfindungsgemäße Pulver weist vorzugsweise eine spezifische Oberfläche nach BET von 0,5 bis 5 m²/g, vorzugsweise 1 bis 3 m²/g auf. Die spezifische Oberfläche nach BET kann dabei gemäß ASTM D3663 bestimmt werden.

Für die Herstellung von supraleitenden Drähten nach der PIT-Methode hat es sich als vorteilhaft erwiesen, Pulver mit einer besonders feinen Partikelgröße zu verwenden. Daher werden die verwendeten Pulver vor dem Einbringen in das Rohr meist aufgemahlen. Hierbei hat sich überraschend gezeigt, dass die erfindungsgemäßen Pulver ein verbessertes Aufmahlverhalten zeigen, wodurch kleinere Partikelgrößen realisiert werden können oder alternativ schonendere Mahlverfahren angewendet werden können. In einer bevorzugten Ausführungsform weist das erfindungsgemäße Pulver nach Aufmahlen der Agglomerate eine Partikelgröße mit einem D99-Wert von weniger als 15 µm, vorzugsweise weniger als 8 µm, besonders bevorzugt von 1 µm bis 6 µm auf, bestimmt mittels Laserbeugung. In einer weiterhin bevorzugten Ausführungsform weist das erfindungsgemäße Pulver nach Aufmahlen der Agglomerate einen D90-Wert von weniger als 10 µm, vorzugsweise weniger als 7 µm und besonders bevorzugt weniger als 0,5 µm bis 5 µm auf, jeweils bestimmt mittels Laserbeugung.

Für die Herstellung von supraleitenden Bauteilen mit additiven Fertigungsverfahren, wie beispielsweise LBM (laser beam melting), EBM (electron beam melting) und/oder LC (laser cladding) hat es sich als vorteilhaft erwiesen, Pulver mit einer besonderen sphärischen Partikelform zu verwenden. Hierbei hat sich überraschend gezeigt, dass die erfindungsgemäßen Pulver sich sehr gut nach bekannten Verfahren zu Pulvern mit sphärischen Partikeln verdüsen lassen, beispielweise mit der EIGA Methode (Electrode Induction-melting Gas Atomization). In einer bevorzugten Ausführungsform weisen daher mindestens 95% aller Pulverpartikel des erfindungsgemäßen Pulvers nach einer Verdüsung einen Feret-Durchmesser von 0,7 bis 1, besonders bevorzugt von 0,8 bis 1, auf, wobei der Feret-Durchmesser im Rahmen der vorliegenden Erfindung definiert ist als der kleinste Durchmesser geteilt durch den größten Durchmesser eines Partikels, bestimmbar durch Auswertung von SEM Aufnahmen.

Das erfindungsgemäße Pulver zeichnet sich insbesondere durch seinen hohen Reinheitsgrad aus. Daher ist eine Ausführungsform bevorzugt, in der der Anteil im Pulver aller metallischen Elemente weniger als 500 ppm, vorzugsweise weniger als 300 ppm, besonders bevorzugt von 1 ppm bis 150 ppm beträgt, jeweils bezogen auf das Gesamtgewicht des Pulvers. Insbesondere handelt es sich bei den metallischen Elementen um solche, die über Mahlprozesse eingebracht werden. Im Rahmen der vorliegenden Erfindung beziehen sich ppm-Angaben jeweils auf Massenanteile.

Für die Herstellung von supraleitenden Bauteilen mit akzeptablen Eigenschaften ist es unerlässlich, dass die chemische Reinheit der verwendeten Pulver hoch ist und Fremdstoffe nur in kontrollierter Form als Dotiermittel eingebracht werden. Unbeabsichtigt im Prozess eingebrachte Stoffe, insbesondere metallische Verunreinigungen und fluoridhaltige Verbindungen sind zu minimieren. Eine der Hauptquellen für diese Verunreinigungen ist dabei die Kontamination aus den verwendeten Niob- und Zinnmetallpulvern. In einer bevorzugten Ausführungsform weist das erfindungsgemäße Pulver einen Fluorgehalt von weniger als 15 ppm, vorzugsweise weniger als 5 ppm auf. In einer weiterhin bevorzugten Ausführungsform weist das erfindungsgemäße Pulver einen Gehalt an zufälligen metallischen Verunreinigungen mit Ausnahme von Tantal von in Summe weniger als 0,8 Gew.-%, bevorzugt von weniger als 0,5 Gew.-%, besonders bevorzugt weniger als 0,25 Gew.-% auf, jeweils bezogen auf das Gesamtgewicht des Pulvers.

In einer bevorzugten Ausführungsform enthält das erfindungsgemäße Pulver weiterhin Dotierstoffe, die im Gegensatz zu den beschriebenen unbeabsichtigt im Prozess eingebrachten Stoffen in definierter Weise dem erfindungsgemäßen Pulver zugegeben werden, wie aus dem Stand der Technik bekannt. Wobei überraschend gefunden wurde, dass an die Dotierstoffe keine besonderen Anforderungen zu stellen sind, sondern vielmehr die gängigen dem Fachmann bekannten Dotierstoffe verwendet werden können.

Einige der im Stand der Technik beschriebenen Verfahren zur Herstellung von supraleitenden Drähten auf Basis von Nb₃Sn gehen von einer Tantalzinnlegierung oder von einer intermetallischen Zinnlegierung auf Basis von Tantal und Niob als Vorläuferpulver aus. Dies hat jedoch den Nachteil, dass Rückstände von Tantal im späteren Kern des Nb₃Sn-Drahtfilaments verbleiben, wodurch unter anderem die Herstellkosten ansteigen und die supraleitenden Eigenschaften der Produkte beeinträchtigt werden. Als weiterer Nachteil ist hier insbesondere die reduzierte Dicke der supraleitenden Nb₃Sn-Grenzschicht im fertigen Drahtfilament mit den zu erwartenden negativen Auswirkungen auf die maximale Stromtragfähigkeit zu erwähnen. In einer bevorzugten Ausführungsform ist das erfindungsgemäße Pulver daher im Wesentlichen frei von Tantal und Tantalverbindungen. In einer besonders bevorzugten Ausführungsform beträgt der Anteil an Tantal und seinen Verbindungen im erfindungsgemäßen Pulver weniger als 1 Gew.-%, vorzugsweise weniger als 0,5 Gew.-%, besonders bevorzugt weniger als 0,1 Gew.-%, jeweils bezogen auf das Gesamtgewicht des Pulvers.

Die erfindungsgemäßen Pulver zeichnen sich durch ihre hohe Porosität bei geringer Primärpartikelgröße aus, Eigenschaften, die mittels eines speziellen Herstellungsverfahrens realisiert werden. Ein weiterer Gegenstand der vorliegenden Erfindung ist somit ein Verfahren zur Herstellung der erfindungsgemäßen Pulver, das es erlaubt genau diese Kombination an Eigenschaften zu realisieren. Das erfindungsgemäße Verfahren zeichnet sich dadurch aus, dass das erfindungsgemäße Pulver durch Umsetzung eines Niobmetallpulvers mit einem Zinnmetallpulver hergestellt wird, wobei das Niobmetallpulver durch Reduktion von Niob-Oxid mit einem dampfförmigen Reduktionsmittel gewonnen wird. Es wurde überraschend gefunden, dass auf diese Weise Pulver erhalten werden, die sich durch die vorteilhafte Kombination von Primärpartikelgröße, Porosität und chemischer Reinheit insbesondere für die Herstellung von supraleitenden Drähten eignen. Geeignete Verfahren zur Reduktion von Niob-Oxid in Gegenwart eines dampfförmigen Reduktionsmittels sind beispielsweise in der WO 00/67936 beschrieben.

Um die Verfahrensführung effizient zu gestalten, hat es sich als vorteilhaft erwiesen, die Gewinnung und Umsetzung des Niobmetallpulvers in einem kombinierten Verfahrensschritt durchzuführen. Daher ist eine Ausführungsform des erfindungsgemäßen Verfahrens bevorzugt, in der das Niobmetallpulver *in situ* gewonnen wird. Dies kann insbesondere dadurch erreicht werden, dass Niob-Oxid in einer Temperaturbehandlung mit dem dampfförmigen Reduktionsmittel in Gegenwart von Zinnmetallpulver zur Reaktion gebracht wird.

Es hat sich überraschend gezeigt, dass auf diese Weise Strukturen zugänglich sind, die die gewünschte Porosität aufweisen. Dies ist insbesondere unerwartet, da der Fachmann bei der Reduktion von NbSn-Mischoxiden und -Hydroxiden mit Magnesium keine porösen NbSn-Produkte erwarten würde.

Bei dem Niob-Oxid handelt es sich vorzugsweise um eines, welches ausgewählt ist aus der Gruppe bestehend aus Nb₂O₅, NbOz, NbO und Mischungen hiervon.

Es hat sich überraschend gezeigt, dass eine für die Herstellung von supraleitenden Drähten vorteilhafte Porosität des Pulvers durch eine geeignete Wahl der Ausgangsverbindungen erreicht werden kann. Daher ist eine Ausführungsform bevorzugt, bei der das Niobmetallpulver dreidimensionale Agglomerate mit einer Größe mit einem D90-Wert von weniger als 400 µm, vorzugsweise von 200 bis 350 µm, bestimmt mittels Laserbeugung, aufweist, die Agglomerate aus Primärpartikeln gebildet sind, die einen mittleren Partikeldurchmesser von weniger als 10 µm, vorzugsweise von weniger als 4 µm, besonders bevorzugt von 0,1 µm bis 2 µm haben, bestimmt mittels Rasterelektronenmikroskopie, und die Agglomerate Poren in einer Größe von 0,1 bis 20 µm, vorzugsweise 0,2 bis 15 µm, besonders bevorzugt von 0,2 bis 5µm aufweisen, bestimmt mittels Quecksilberporosimetrie.

Als besonders positiv hat sich die Verwendung von Niobmetallpulvern mit einer bimodalen Porengrößenverteilung erwiesen. Daher ist eine Ausführungsform bevorzugt, in der das Niobmetallpulver eine bimodale Porengrößenverteilung aufweist, vorzugsweise mit einem Maximum im Bereich 0,9 bis 20 µm, besonders bevorzugt 1 bis 10 µm, und einem Maximum im Bereich 0,1 bis 0,9 µm, vorzugsweise im Bereich 0,2 bis 0,8 µm, bestimmt mittels Quecksilberporosimetrie. Ohne an eine bestimmte Theorie gebunden zu sein, wird angenommen, dass durch die bimodale Verteilung der Porengrößen ein verbessertes Eindringen des Zinns durch die Poren in das Innere der Agglomerate ermöglicht wird.

Es hat sich überraschend gezeigt, dass für die Herstellung der erfindungsgemäßen Pulver eine Begrenzung des Sauerstoffgehalts der Niobmetallpulver, wie im Stand der Technik beschrieben, nicht notwendig ist. Nichtsdestotrotz hat es sich als vorteilhaft erwiesen, wenn der Sauerstoffgehalt nicht zu hoch ist. Daher weist das für die Herstellung der erfindungsgemäßen Pulver eingesetzte Niobmetallpulver in einer bevorzugten Ausführungsform einen Sauerstoffgehalt von weniger als 2,2 Gew.-%, bevorzugt von 0,35 bis 1,9 Gew.-%, besonders bevorzugt von 0,4 bis 1,6 Gew.-%, auf, jeweils bezogen auf das Gesamtgewicht des Niobmetallpulvers. Weiterhin ist auch keine Limitierung des Wasserstoffgehaltes dieser Niobmetallpulver auf weniger als 100 ppm erforderlich. So können auch Niobmetallpulver mit einem Wasserstoffgehalt von größer 100 ppm, sogar von 110 bis 400 ppm, im erfindungsgemäßen Verfahren eingesetzt werden. Daher ist eine Ausführungsform bevorzugt, in der das für die Herstellung der erfindungsgemäßen Pulver eingesetzte Niobmetallpulver einen Wasserstoffgehalt von 110 bis 400 ppm aufweist, bezogen auf das Gesamtgewicht des Niobmetallpulvers.

Um die Bildung von unerwünschten und zum Teil schwerlöslichen Mg- und Ca-Halogeniden, wie beispielsweise MgF₂ und CaF₂, zu verhindern, wird ein Niobmetallpulver mit möglichst niedrigem Fluor- und Chlorgehalt bevorzugt. Daher sind Niobmetallpulver, hergestellt durch metallothermische Dampfreduktion von Niob-Oxiden bevorzugt vor Niobmetallpulver hergestellt durch Reduktion von fluorhaltigen Verbindungen, wie beispielsweise K₂NbF₇, oder elektrochemischer Reduktion in einer halogenidhaltigen Salzschmelze. In einer bevorzugten Ausführungsform enthält das verwendete Niobmetallpulver jeweils weniger als 15 ppm Fluor und Chlor, vorzugsweise jeweils weniger als 10 ppm, besonders bevorzugt jeweils weniger als 2 ppm, bezogen auf das Gesamtgewicht des Niobmetallpulvers.

Zur Sicherstellung der Notwendigen chemischen Reinheit der erfindungsgemäßen Pulver ist eine bevorzuget Ausführungsform die Verwendung von Niobmetallpulver mit einer Summe über alle metallischen Elementen von weniger als 800 ppm, vorzugsweise von weniger als 500 ppm.

Als dampfförmiges Reduktionsmittel haben sich Erdalkaliverbindungen als besonders vorteilhaft herausgestellt. In einer bevorzugten Ausführungsform handelt es sich bei dem dampfförmigen Reduktionsmittel um Magnesiumdampf. Es hat sich gezeigt, dass auf diese Weise eine gute Benetzung der Niob-Oxid - Pulverpartikel erreicht werden kann. Insbesondere Magnesium als Reduktionsmittel weist den Vorteil auf, dass es nach der Umsetzung zum MgO einfach und effizient entfernt werden kann, wodurch eine unnötige Verunreinigung der Produkte vermieden wird.

Durch das erfindungsgemäße Verfahren lassen sich die gewünschten Zielverbindungen bei geringeren Temperaturen und in kürzerer Zeit herstellen, als bislang im Stand der Technik bekannt. Daher ist eine Ausführungsform des erfindungsgemäßen Verfahrens bevorzugt, in der die Umsetzung des metallischen Niobpulvers mit dem metallischen Zinn bei einer Reaktionstemperatur im Bereich von 300 bis 1100 °C, vorzugsweise 600 bis 1050 °C, besonders bevorzugt 650 bis 790 °C erfolgt. Die Reaktionszeit beträgt dabei vorzugsweise weniger als 8 Stunden, vorzugsweise 0,5 bis 7 Stunden, besonders bevorzugt 1 bis 4 Stunden.

Wie bereits beschrieben, können dem Pulver Dotierstoffe zugefügt werden, wodurch sich die Eigenschaften des Pulvers anpassen lassen. Es hat sich überraschend als vorteilhaft herausgestellt, wenn diese Dotierstoffe bereits ganz zu Anfang des Verfahrens eingebracht werden. Daher ist eine Ausführungsform bevorzugt, in der das zur Herstellung des Niobmetallpulvers verwendete Niob-Oxid weiterhin Dotierstoffe aufweist. Hinsichtlich der eingesetzten Dotierstoffe sind keine besonderen Anforderungen zu stellen. Vielmehr wurde überraschend gefunden, dass alle üblichen, dem Fachmann bekannten Dotierstoffe eingesetzt werden können.

Das erfindungsgemäße Pulver ist insbesondere für die Herstellung von supraleitenden Bauteilen geeignet. Daher ist ein weiterer Gegenstand der vorliegenden Erfindung die Verwendung des erfindungsgemäßen Pulvers für die Herstellung von supraleitenden Bauteilen, insbesondere für die Herstellung von supraleitenden Drähten. Das supraleitende Bauteil wird dabei vorzugsweise durch pulvermetallurgische Prozesse oder additive Fertigungsverfahren oder PIT-Verfahren hergestellt. Die Herstellung der supraleitenden Drähte erfolgt vorzugsweise mittels PIT-Verfahren.

Ein weiterer Gegenstand der vorliegenden Erfindung ist die Verwendung des erfindungsgemäßen Pulvers in additiven Fertigungsverfahren. Bei den additiven Fertigungsverfahren kann es sich beispielsweise um LBM (laser beam melting), EBM (electron beam melting) und/oder LC (laser cladding) handeln.

Die vorliegende Erfindung wird anhand der folgenden Beispiele näher erläutert, wobei diese keinesfalls als Einschränkung des Erfindungsgedankens zu verstehen sind.

### Beispiele:

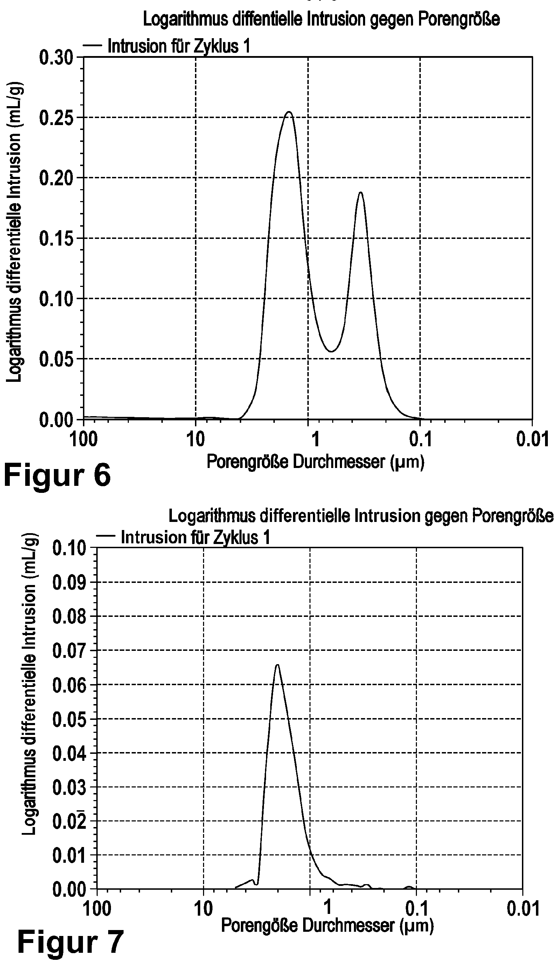

Niobmetallpulver wurde analog zu dem in der WO 00/67936A1 beschriebenen Herstellungsverfahren durch Umsetzung von NbOz mit Magnesiumdampf gewonnen. Das erhaltene Niobmetallpulver wies einen Sauerstoffgehalt von 8500 ppm, einen Wasserstoffgehalt von 230 ppm, einen Fluorgehalt von 2 ppm, metallische Verunreinigungen von in Summe 310 ppm und eine Agglomeratgröße mit einem D50-Wert von 205 µm und einem D90-Wert von 290 µm auf. Die mittlere Größe der Primärpartikel betrug 0,6 µm und die Porengrößenverteilung der Agglomerate war bimodal mit Maxima bei 0,5 und 3 µm (siehe Figur 6). Dieses Niobmetallpulver wurde anschließend mit Zinnmetallpulver mit einem Sauerstoffgehalt von 6800 ppm unter verschiedenen Bedingungen umgesetzt und die erhaltenen Produkte analysiert.

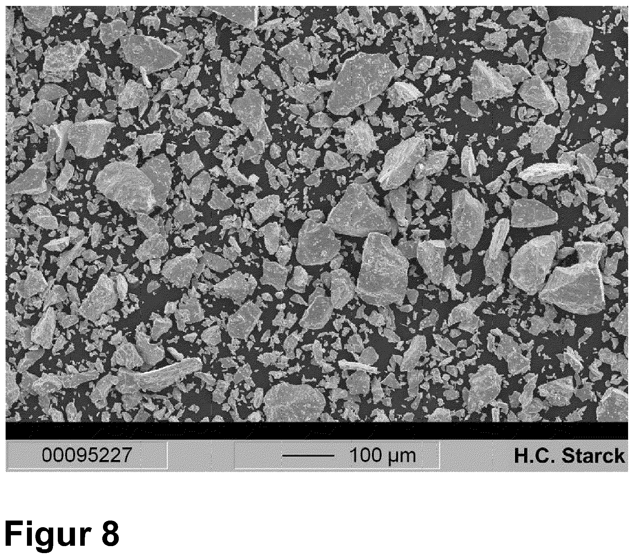

Bei den Vergleichsversuchen 1 und 2 wurden Pulver herangezogen, bei denen herkömmliches porenfreies Niobmetallpulver mit einem Sauerstoffgehalt von 2900 ppm und einem Wasserstoffgehalt von 10 ppm verwendet wurde. Diese Vergleichspulver wiesen einen D90-Wert von 95 µm auf (siehe Figur 8).

Für den Vergleichsversuch 3 und 4 wurde ein Niobmetallpulver hergestellt durch Reduktion von K₂NbF₇ mit flüssigem Natrium in einer Salzschmelze aus KCI/KF bei 850°C und anschließendem entfernen aller Salze durch Waschung. Das so hergestellte Niobmetallpulver enthielt irregulär geformte Partikel ohne Poren mit einem D90-Wert von 29 µm, die nicht zu Agglomeraten versintert waren. Das Niobmetallpulver wies einen Sauerstoffgehalt von 2,4 Gew.%, einen Wasserstoffgehalt von 150 ppm, einen Fluorgehalt von 2500 ppm und metallische Verunreinigungen von in Summe 10200 ppm auf, wobei die Hauptverunreinigungen Nickel und Eisen darstellten.

In allen Vergleichsversuchen wurden die Niobmetallpulver anschließend mit Zinnmetallpulver mit einem Sauerstoffgehalt von 6800 ppm unter verschiedenen Bedingungen umgesetzt und die erhaltenen Produkte analysiert.

Das verwendete Zinnmetallpulver hatte in allen Versuchen eine Partikelgröße von weniger als 150 µm.

Die Ergebnisse sind in Tabelle 1 zusammengefasst, wobei sich die Angaben der Porengröße und der Partikelgröße jeweils auf die Agglomerate beziehen. Die Partikelgröße wurde jeweils mittels Laserbeugung (MasterSizer S, Dispersion in Wasser und Daxad11, 5 min Ultraschallbehandlung) bestimmt. Die Größe der Poren wurde mittels Quecksilberporosimetrie (Firma Micromeritics; AutoPore IV) bestimmt und bezieht sich auf die Lage des Maximums der Porengrößenverteilung. Der Sauerstoffgehalt wurde mittels Trägergasheißextraktion (Leco TCH600) bestimmt. Die Spurenanalytik der metallischen Verunreinigungen erfolgte mittels ICP-OES mit den folgenden Analysegeräten PQ 9000 (Analytik Jena) oder Ultima 2 (Horiba). Jegliche Angaben in Gew.-% beziehen sich jeweils auf das Gesamtgewicht des Pulvers.

Die Röntgenbeugung erfolgt an pulverförmigen Proben mit einem Gerät der Firma Malvern-PANalytical (X' Pert-MPD mit Halbleiterdetektor, Röntgenröhre Cu LFF mit 40KV / 40mA, Ni-Filter).

Das Pulver des Beispiels 3 wurde nach Waschung mit H₂SO₄ und Trocknung analysiert.

Die Pulver der Vergleichsbeispiele bildeten keine Agglomerate aus und zeigten in den Analysen eine inhomogene Phasenzusammensetzung. Weiterhin sind die Pulver der Vergleichsversuche 3 und 4 durch sehr hohe Fluorgehalte von 1300 bis 1800 ppm und metallische Verunreinigungen von im Summe 6500 bis 9000 ppm charakterisiert und daher für die Herstellung von supraleitenden Bauteilen, insbesondere von Drähten, nicht geeignet.

Das Pulver aus Beispiel 1 wurde anschließend in einer sauerstofffreien Atmosphäre aufgemahlen, wobei Partikelgrößenverteilungen mit einem D90-Wert von 2,6 µm und einem D99-Wert von 3,7 µm erreicht wurden. Der Sauerstoffgehalt nach dem Aufmahlen betrug 1,14 Gew.-% und die Differenz aller aufsummierten metallischen Verunreinigungen vor und nach dem Mahlprozess betrug 140 ppm.

Im Rahmen der vorliegenden Erfindung wurde überraschend gefunden, dass die erhöhte Porosität der erfindungsgemäßen Pulver wider Erwarten nicht zu einer Erhöhung des Sauerstoffgehalts führt, auch dann nicht, wenn die Pulver einem weiteren Mahlschritt unterworfen werden.

Weiterhin zeigen die erfindungsgemäßen Beispiele, dass kein unreagiertes Zinn in den Zielverbindungen nachgewiesen werden konnte.

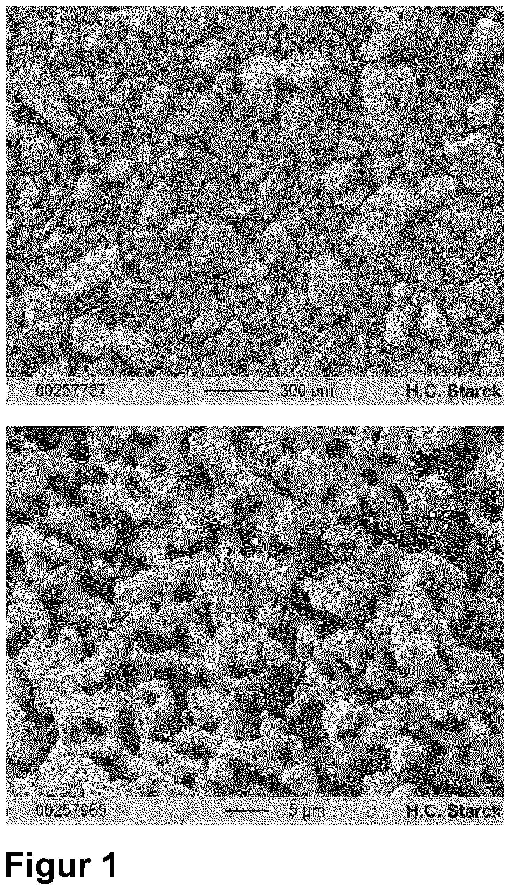

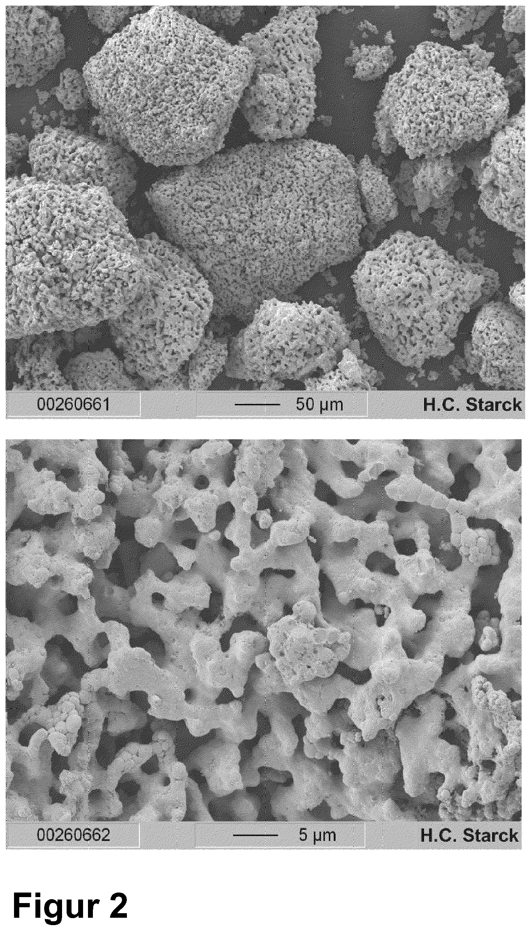

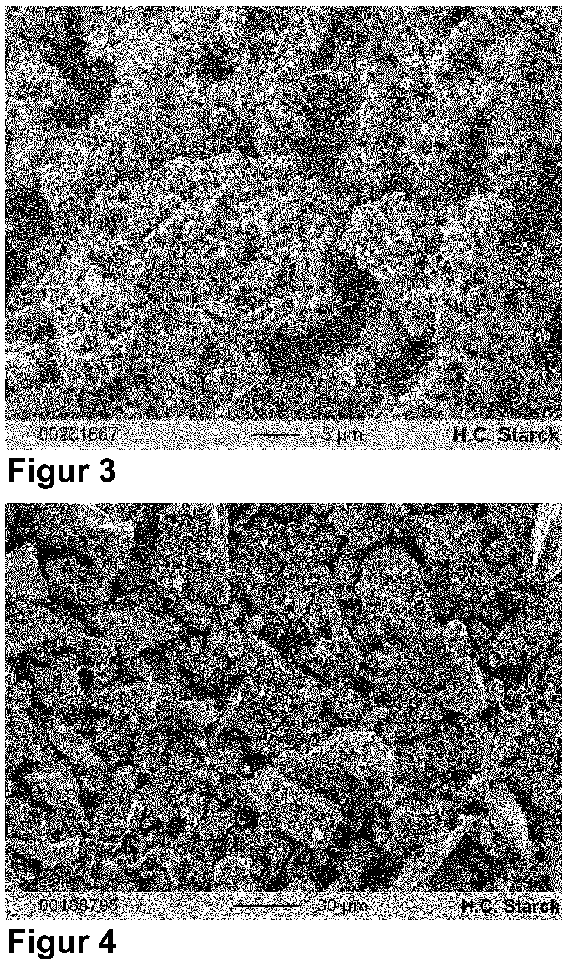

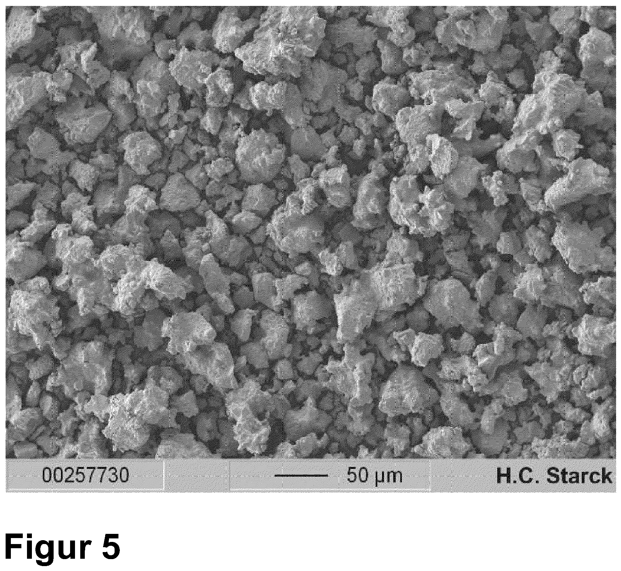

Die Figuren 1 bis 3 zeigen SEM-Aufnahmen der erfindungsgemäßen Pulver, wobei Figur 1 das gemäß Beispiel 1 gewonnene NbSn₂, Figur 2 das gemäß Beispiel 2 gewonnene Nb₃Sn und Figur 3 das gemäß Beispiel 3 gewonnene Nb₃Sn zeigt. Auf allen Aufnahmen ist deutlich zu erkennen, dass die erfindungsgemäßen Pulver eine Porosität aufweisen, die bei herkömmlichen Pulvern nicht beobachtet wurde, wie in den Figuren 4 und 5 zu sehen, die SEM-Aufnahmen der Vergleichsbeispiele 1 und 2 zeigen.

Figur 6 zeigt eine Messung der Porengrößenverteilung des zur Herstellung der erfindungsgemäßen Pulver verwendeten Niobmetallpulvers, wobei gut die bimodale Verteilung der Porengrößen zu erkennen ist.

Figur 7 zeigt eine Messung der Porengrößenverteilung des erfindungsgemäßen Pulvers nach Beispiel 1 mit einem Maximum bei einer Porengröße von ca. 3 µm.

Figur 8 zeigt eine SEM-Aufnahme des zur Herstellung der Vergleichsbeispiele 1 und 2 verwendeten Niobmetallpulvers.

**Tabelle 1:**

| Versuch | Herstellung | Röntgenbeugung | Phasenzusammensetzung aus Rietveld Analyse | Poren größe [µm] | Primärpartikelgröße [µm] | Partikel größe D50 [µm] | Partikel große D90 [µm] | Partikelgröße D99 [µm] | BET-Oberfläche [m²/g] | O-Gehalt [Gew.-%] |
|---|---|---|---|---|---|---|---|---|---|---|
| Vgl.-1 | Nb + 2 Sn | Nb, NbSn₂, Nb₃Sn, NbO | Nb: 51% | - | - | 26 | 77 | 98 | 0,3 | 1,29 |
| | | | NbSn₂: 24% | | | | | | | |
| | 790 °C/ 2h | | Nb₃Sn: 19% | | | | | | | |
| | | | NbO: 6% | | | | | | | |
| Vgl.-2 | 3 Nb + Sn | Nb₃Sn, NbO, Nb, NbSn₂ | Nb₃Sn: 92% | - | - | 39 | 65 | 85 | 0,25 | 1,42 |
| | | | NbO: 3% | | | | | | | |
| | 1050 °C/ 6h | | Nb: 4% | | | | | | | |
| | | | NbSn₂:1 % | | | | | | | |
| Vgl.-3 | Nb + 2 Sn | NbSn2, Nb, Nb3Sn, NbO | NbSn2: 69% | - | - | 19 | 34 | 49 | 0,29 | 2,9 |
| | | | Nb: 10% | | | | | | | |
| | 790 °C/ 2h | | Nb3Sn: 15% | | | | | | | |
| | | | NbO: 6% | | | | | | | |
| Vgl.-4 | 3 Nb + Sn | Nb3Sn, NbO, Nb | Nb3Sn: 90% | - | - | 28 | 39 | 69 | 0,21 | 3,2 |
| | 1050 °C/ 6h | | NbO: 8% Nb: 2% | | | | | | | |
| Bsp. 1 | Nb + 2 Sn | NbSn₂, NbO | NbSn₂: 97% | 3 | <5 | 150 | 277 | 344 | 1,7 | 1,2 |
| | 790 °C/ 2h | | NbO: 3% | | | | | | | |
| Bsp. 2 | 3 Nb + Sn | Nb₃Sn, NbO | Nb₃Sn: 96% | 3 | <8 | 156 | 267 | 360 | 1,4 | 1,3 |
| | 1050 °C/ 6h | | NbO: 4% | | | | | | | |
| Bsp. 3 | 3 NbO₂ + 6Mg_{(g)} + Sn | Nb₃Sn, NbSn₂,NbO | Nb₃Sn: 93% | 1,5 | <2 | 122 | 234 | 299 | 4,2 | 1,59 |
| | | | NbSn₂: 3% | | | | | | | |
| | 1050 °C/ 6h | | NbO: 4% | | | | | | | |

## Patentansprüche

1. Pulver umfassend NbₓSn_{y} mit 1 ≤ x ≤ 6 und 1 ≤ y ≤ 5 für die Herstellung supraleitender Bauteile, **dadurch gekennzeichnet, dass** das Pulver dreidimensionale Agglomerate mit einer Partikelgröße D90 von 220 bis 400 µm, bestimmt mittels Laserbeugung, aufweist, wobei die Agglomerate aus Primärpartikeln gebildet sind, die einen mittleren Partikeldurchmesser von weniger als 15 µm, bevorzugt von weniger als 8 µm, besonders bevorzugt von 0,1 µm bis 5 µm haben, bestimmt mittels Rasterelektronenmikroskopie, und die Agglomerate Poren aufweisen, von denen 90% oder mehr einen Durchmesser von 0,1 bis 20 µm, vorzugsweise 0,2 bis 15 µm aufweisen, bestimmt mittels Quecksilberporosimetrie.

2. Pulver nach Anspruch 1, **dadurch gekennzeichnet, dass** der Anteil an Nb₃Sn oder Nb₆Sn₅ oder NbSn₂ im Pulver jeweils mehr als 90%, vorzugsweise mehr als 94%, besonders bevorzugt von mehr als 97%, ausmacht, bezogen auf alle nachgewiesen kristallographischen Phasen und basierend auf einer Rietveld-Analyse eines Röntgenpulverdiffraktogramms des Pulvers.

3. Pulver nach einem oder mehrerer der vorangehenden Ansprüche, **dadurch gekennzeichnet, dass** das Pulver einen Sauerstoffgehalt von weniger als 1,8 Gew.-%, vorzugsweise 0,35 bis 1,5 Gew.-%, besonders bevorzugt 0,5 bis 1,2 Gew.-% aufweist, bezogen auf das Gesamtgewicht des Pulvers.

4. Pulver nach einem oder mehrerer der vorangehenden Ansprüche, **dadurch gekennzeichnet, dass** das Pulver nach Aufmahlen der Agglomerate eine Partikelgröße D99 von weniger als 15 µm, vorzugsweise weniger als 8 µm, besonders bevorzugt von 1 µm bis 6 µm aufweist, bestimmt mittels Laserbeugung.

5. Pulver nach einem oder mehrerer der vorangehenden Ansprüche, **dadurch gekennzeichnet, dass** das Pulver einen Anteil an metallischem Zinn von weniger als 3%, vorzugsweise weniger als 0,5% aufweist, bezogen auf alle nachgewiesen kristallographischen Phasen und bestimmt durch Rietveld-Analyse eines Röntgendiffraktogramms des erfindungsgemäßen Pulvers.

6. Verfahren zur Herstellung eines Pulvers gemäß einem oder mehrerer der Ansprüche 1 bis 5, **dadurch gekennzeichnet, dass** das Pulver durch Umsetzung von Niobmetallpulver mit Zinnmetallpulver hergestellt wird, wobei das Niobmetallpulver durch Reduktion von Niob-Oxid mit einem dampfförmigen Reduktionsmittel gewonnen wird.

7. Verfahren nach Anspruch 6, **dadurch gekennzeichnet, dass** das Niobmetallpulver *in situ* gewonnen wird.

8. Verfahren nach einem oder mehrerer der Ansprüche 6 und 7, **dadurch gekennzeichnet, dass** das Niobmetallpulver Poren in einer Größe von 0,1 bis 20 µm, vorzugsweise 0,2 bis 15 µm aufweist, bestimmt mittels Quecksilberporosimetrie.

9. Verfahren nach einem oder mehrerer der Ansprüche 6 bis 8, **dadurch gekennzeichnet, dass** das Niobmetallpulver dreidimensionale Agglomerate mit einer Größe mit einem D90-Wert von weniger als 400 µm, vorzugsweise von 200 bis 350 µm, bestimmt mittels Laserbeugung aufweist, und die Agglomerate aus Primärpartikeln gebildet sind, die einen mittleren Partikeldurchmesser von weniger als 10 µm, vorzugsweise von weniger als 4 µm, besonders bevorzugt von 0,1 µm bis 2 µm haben, bestimmt mittels Rasterelektronenmikroskopie

10. Verfahren nach einem oder mehrerer der Ansprüche 6 bis 9, **dadurch gekennzeichnet, dass** das Niobmetallpulver eine bimodale Verteilung der Porengröße aufweist.

11. Verfahren nach einem oder mehrerer der Ansprüche 6 bis 10, **dadurch gekennzeichnet, dass** es sich bei dem Niob-Oxid um eine Verbindung ausgewählt aus der Gruppe bestehend aus NbzOs, NbOz, NbO und Mischungen hiervon handelt.

12. Verfahren nach einem oder mehrerer der Ansprüche 6 bis 11, **dadurch gekennzeichnet, dass** es sich bei dem dampfförmigen Reduktionsmittel um Magnesiumdampf handelt.

13. Verwendung eines Pulvers gemäß einem oder mehrerer der Ansprüche 1 bis 5 zu Herstellung von supraleitenden Bauteilen, insbesondere zur Herstellung von supraleitenden Drähten und Spulen.

14. Verwendung nach Anspruch 13, **dadurch gekennzeichnet, dass** das supraleitende Bauteil durch pulvermetallurgische Prozesse, insbesondere PIT-Verfahren, oder additive Fertigungsverfahren hergestellt wird.

15. Verwendung eines Pulvers gemäß einem oder mehrerer der Ansprüche 1 bis 5 in additiven Fertigungsverfahren, insbesondere LBM (laser beam melting), EBM (electron beam melting) und/oder LC (laser cladding), oder pulvermetallurgischen Prozessen, insbesondere PIT-Verfahren.

## Claims

1. Powder comprising NbₓSn_{y} where 1 ≤ x ≤ 6 and 1 ≤ y ≤ 5 for the production of superconducting components, **characterized in that** the powder comprises three-dimensional agglomerates having a particle size D90 of from 220 to 400 pm, determined by means of laser light scattering, where the agglomerates are made up of primary particles which have an average particle diameter of less than 15 pm, preferably less than 8 pm, particularly preferably from 0.1 µm to 5 pm, determined by means of scanning electron microscopy, and the agglomerates have pores of which 90% or more have a diameter of from 0.1 to 20 pm, preferably from 0.2 to 15 pm, determined by means of mercury porosimetry.

2. Powder according to Claim 1, **characterized in that** the proportion of Nb₃Sn or Nb₆Sn₅ or NbSn₂ in the powder is in each case more than 90%, preferably more than 94%, particularly preferably more than 97%, based on all crystallographic phases detected and based on a Rietveld analysis of an X-ray powder diffraction pattern of the powder.

3. Powder according to one or more of the preceding claims, **characterized in that** the powder has an oxygen content of less than 1.8% by weight, preferably from 0.35 to 1.5% by weight, particularly preferably from 0.5 to 1.2% by weight, based on the total weight of the powder.

4. Powder according to one or more of the preceding claims, **characterized in that** the powder after milling of the agglomerates has a particle size D99 of less than 15 pm, preferably less than 8 pm, particularly preferably from 1 µm to 6 pm, determined by means of laser light scattering.

5. Powder according to one or more of the preceding claims, **characterized in that** the powder has a proportion of metallic tin of less than 3%, preferably less than 0.5%, based on all crystallographic phases detected and determined by Rietveld analysis of an X-ray diffraction pattern of the powder of the invention.

6. Process for producing a powder according to one or more of Claims 1 to 5, **characterized in that** the powder is produced by reaction of niobium metal powder with tin metal powder, where the niobium metal powder is obtained by reduction of niobium oxide using a gaseous reducing agent.

7. Process according to Claim 6, **characterized in that** the niobium metal powder is obtained *in situ.*

8. Process according to one or more of Claims 6 and 7, **characterized in that** the niobium metal powder has pores having a size of from 0.1 to 20 pm, preferably from 0.2 to 15 pm, determined by means of mercury porosimetry.

9. Process according to one or more of Claims 6 to 8, **characterized in that** the niobium metal powder comprises three-dimensional agglomerates having a size with a D90 of less than 400 pm, preferably from 200 to 350 pm, determined by means of laser light scattering, and the agglomerates are made up of primary particles which have an average particle diameter of less than 10 pm, preferably less than 4 pm, particularly preferably from 0.1 µm to 2 µm, determined by means of scanning electron microscopy.

10. Process according to one or more of Claims 6 to 9, **characterized in that** the niobium metal powder has a bimodal distribution of the pore size.

11. Process according to one or more of Claims 6 to 10, **characterized in that** the niobium oxide is a compound selected from the group consisting of Nb₂O₅, NbO₂, NbO and mixtures thereof.

12. Process according to one or more of Claims 6 to 11, **characterized in that** the gaseous reducing agent is magnesium vapor.

13. Use of a powder according to one or more of Claims 1 to 5 for producing superconducting components, in particular for producing superconducting wires and coils.

14. Use according to Claim 13, **characterized in that** the superconducting component is produced by powder-metallurgical processes, in particular PIT processes, or additive manufacturing processes.

15. Use of a powder according to one or more of Claims 1 to 5 in additive manufacturing processes, in particular LBM (laser beam melting), EBM (electron beam melting) and/or LC (laser cladding), or powder-metallurgical processes, in particular PIT processes.

## Revendications

1. Poudre comprenant du NbₓSn_{y}, où 1 ≤ x ≤ 6 et 1 ≤ y ≤ 5, pour la fabrication de composants supraconducteurs, **caractérisée en ce que** la poudre comporte des agglomérats tridimensionnels ayant une taille de particule D90 de 220 à 400 pm, déterminée par diffraction laser, les agglomérats étant constitués de particules primaires qui ont un diamètre moyen de particule de moins de 15 pm, de préférence de moins de 8 pm, de façon particulièrement préférée de 0,1 µm à 5 pm, déterminé par microscopie électronique à balayage, et les agglomérats comportent des pores, dont 90 % ou plus présentent un diamètre de 0,1 à 20 pm, de préférence 0,2 à 15 pm, déterminé par porosimétrie au mercure.

2. Poudre selon la revendication 1, **caractérisée en ce que** la teneur en Nb₃Sn ou Nb₆Sn ou NbSn₂ de la poudre constitue chaque fois plus de 90 %, de préférence plus de 94 %, de façon particulièrement préférée plus de 97 %, par rapport à toutes les phases cristallographiques détectées et sur la base d'une analyse de Rietveld d'un diagramme de diffraction des rayons X sur poudre de la poudre.

3. Poudre selon une ou plusieurs des revendications précédentes, **caractérisée en ce que** la poudre présente une teneur en oxygène de moins de 1,8 % en poids, de préférence 0,35 à 1,5 % en poids, de façon particulièrement préférée 0,5 à 1,2 % en poids, par rapport au poids total de la poudre.

4. Poudre selon une ou plusieurs des revendications précédentes, **caractérisée en ce que** la poudre présente après broyage des agglomérats une taille de particule D99 de moins de 15 pm, de préférence moins de 8 pm, de façon particulièrement préférée de 1 µm à 6 pm, déterminée par diffraction laser.

5. Poudre selon une ou plusieurs des revendications précédentes, **caractérisée en ce que** la poudre présente une teneur en étain métallique de moins de 3 %, de préférence moins de 0,5 %, par rapport à toutes les phases cristallographiques détectées et déterminée par analyse de Rietveld d'un diagramme de diffraction des rayons X de la poudre selon l'invention.

6. Procédé pour la préparation d'une poudre selon une ou plusieurs des revendications 1 à 5, **caractérisé en ce que** la poudre est préparée par mise en réaction de poudre métallique de niobium avec de la poudre métallique d'étain, la poudre métallique de niobium étant obtenue par réduction d'oxyde de niobium avec un réducteur à l'état de vapeur.

7. Procédé selon la revendication 6, caractérisé en ce la poudre métallique de niobium est obtenue in situ.

8. Procédé selon une ou plusieurs des revendications 6 et 7, **caractérisé en ce que** la poudre métallique de niobium présente des pores ayant une taille de 0,1 à 20 pm, de préférence 0,2 à 15 pm, déterminée par porosimétrie au mercure.

9. Procédé selon une ou plusieurs des revendications 6 à 8, **caractérisé en ce que** la poudre métallique de niobium comporte des agglomérats tridimensionnels ayant une taille ayant une valeur D90 de moins de 400 pm, de préférence de 200 à 350 pm, déterminée par diffraction laser, et les agglomérats sont constitués de particules primaires qui ont un diamètre moyen de particule de moins de 10 pm, de préférence de moins de 4 pm, de façon particulièrement préférée de 0,1 µm à 2 µm, déterminé par microscopie électronique à balayage.

10. Procédé selon une ou plusieurs des revendications 6 à 9, **caractérisé en ce que** la poudre métallique de niobium présente une distribution bimodale de la taille de pore.

11. Procédé selon une ou plusieurs des revendications 6 à 10, **caractérisé en ce que** pour ce qui est de l'oxyde de niobium il s'agit d'un composé choisi dans le groupe constitué par Nb₂O₅, NbO₂, NbO et des mélanges de ceux-ci.

12. Procédé selon une ou plusieurs des revendications 6 à 11, **caractérisé en ce que** pour ce qui est du réducteur à l'état de vapeur, il s'agit de vapeur de magnésium.

13. Utilisation d'une poudre selon une ou plusieurs des revendications 1 à 5 pour la fabrication de composants supraconducteurs, en particulier pour la fabrication de fils métalliques supraconducteurs et de bobines supraconductrices.

14. Utilisation selon la revendication 13, **caractérisée en ce que** le composant supraconducteur est fabriqué par des processus de métallurgie des poudres, en particulier le procédé PIT, ou des procédés de fabrication additive.

15. Utilisation d'une poudre selon une ou plusieurs des revendications 1 à 5 dans des procédés de fabrication additive, en particulier LBM (laser beam melting), EBM (electron beam melting) et/ou LC (laser cladding), ou des processus de métallurgie des poudres, en particulier le procédé PIT.
